# EUROPÄISCHE PATENTSCHRIFT

(11) **EP 1 800 117 B1**
(45) Veröffentlichungstag und Bekanntmachung des Hinweises auf die Patenterteilung: **27.01.2010**
(21) Anmeldenummer: 05789497.4
(22) Anmeldetag: 18.08.2005
(51) Int. Cl.: G01N 27/419, G01N 27/406

(54) **SENSORELEMENT UND VERFAHREN ZUR BESTIMMUNG DER KONZENTRATION VON GASKOMPONENTEN IN EINEM GASGEMISCH**
SENSOR ELEMENT AND METHOD FOR DETERMINING THE CONCENTRATION OF GAS COMPONENTS IN A GAS MIXTURE
ELEMENT DE DETECTION ET PROCEDE POUR DETERMINER LA CONCENTRATION DE COMPOSANTS GAZEUX DANS UN MELANGE GAZEUX

(30) Priorität: 05.10.2004 DE 102004048318
(43) Veröffentlichungstag der Anmeldung: 27.06.2007
(73) Patentinhaber: ROBERT BOSCH GMBH, 70442 Stuttgart (DE)
(72) Erfinder: DIEHL, Lothar, 70839 Gerlingen (DE); SCHEFFEL, Marcus, 91052 Erlangen (DE)
(86) Internationale Anmeldenummer: PCT/EP2005/054078
(87) Internationale Veröffentlichungsnummer: WO 2006/037689

(56) Entgegenhaltungen:
- DE-A1- 10 031 474
- DE-C1- 10 216 724

## Beschreibung

### Stand der Technik

Die Erfindung betrifft ein Sensorelement zur Bestimmung der Konzentration von Gaskomponenten in einem Gasgemisch, insbesondere der Konzentration von Gaskomponenten im Abgas von Brennkraftmaschinen, sowie ein Verfahren zum Betreiben eines derartigen Sensorelements nach dem Oberbegriff der unabhängigen Ansprüche 1 und 4.

Ein gattungsgemäßes Sensorelement für eine sogenannte Breitband-Lambdasonde ist aus der DE 199 41 051 A1 bekannt. Dieses Sensorelement weist einen aus Festelektrolytschichten zusammengesetzten Sensorkörper auf, in dem ein mit dem Abgas über eine Diffusionsbarriere in Verbindung stehender Hohl- oder Meßraum und ein von einem Referenzgas beaufschlagter Referenzgaskanal ausgebildet sind. Eine Pumpzelle zum Pumpen von Sauerstoff in den Hohlraum hinein (fettes Abgas) oder aus dem Meßraum heraus (mageres Abgas) umfaßt eine auf dem Festelektrolytkörper angeordnete, von einer porösen Schutzschicht abgedeckte, äußere Pumpelektrode und eine im Hohlraum angeordnete innere Pumpelektrode. Die die äußere Pumpelektrode abdeckende poröse Schutzschicht weist einen größeren Grenzstrom auf als die Diffusionsbarriere. Eine Konzentrations-oder Nernstzelle umfaßt eine im Meßraum angeordnete Meß- oder Nernstelektrode und eine im Referenzgaskanal angeordnete Referenzelektrode. Der bei Einregeln einer konstanten Spannung von z.B. 450 mV zwischen Nemst- und Referenzelektrode zwischen den Pumpelektroden fließende Grenzstrom ist bei konstantem Gesamtdruck ein Maß für den Lambdawert des Abgases. Die Empfindlichkeit dieses Sensorelements wird über den durch die Diffusionsbarriere bestimmten Grenzstrom eingestellt.

Da der den Grenzstrom bestimmende Partialdruck proportional zu Gesamtdruck und Molenbruch ist, zeigt ein solches Sensorelement eine dynamische Druckabhängigkeit, die sich dadurch äußert, daß Druckspitzen im Abgas als Ausgangssignal der Lambdasonde erscheinen, obgleich diese nicht ursächlich mit der Änderung der Gaszusammensetzung zusammenhängen. Durch die Diffusionsbarriere soll die Empfindlichkeit gegenüber Gesamtdruckänderungen bei niedrigen Frequenzen herabgesetzt werden. Die Diffusionsbarriere soll jedoch die Empfindlichkeit gegenüber Molenbruchänderungen nicht herabsetzen, deren Kenntnis für die Einstellung der für die Verbrennung im Motor optimalen Abgaszusammensetzung erforderlich ist.

Durch die unterschiedlichen Molekülmassen weisen nun verschiedene Gasarten verschiedene thermische Geschwindigkeiten und damit unterschiedliche Diffusionskoeffizienten auf. Aus diesem Grunde ist die Empfindlichkeit der Sonde von der Gasart abhängig. Da die Sonde nur einen Gesamtstrom als Ausgangssignal liefert, kann eine Konzentrationsänderung für eine einzelne Gaskomponente nicht mehr eindeutig von einer Änderung der Gasart unterschieden werden.

Der Erfindung liegt daher die Aufgabe zugrunde, ein auf technisch einfache Weise zu realisierendes Sensorelement zur Bestimmung der Konzentration einer Gaskomponente in einem Gasgemisch und ein Verfahren zum Betreiben eines derartigen Sensorelements zu vermitteln, bei welchem eine einzelne Gaskomponente von einer Änderung der Gasart unterschieden werden kann.

### Vorteile der Erfindung

Diese Aufgabe wird gelöst durch die Merkmale der Ansprüche 1 und 4. Vorteilhafte Weiterbildungen und Ausgestaltungen des Sensorelements und des Verfahrens zum Betreiben eines derartigen Sensorelements sind Gegenstand der auf die unabhängigen Ansprüche rückbezogenen Unteransprüche.

Ein Sensor gemäß dem Oberbegriff des Anspruchs 1 ist aus DE 100 31 474 A1 sowie DE 102 16 724 C1 bekannt.

Grundidee der Erfindung ist es, eine vorbeschriebene Breitbandsonde im Dispersionsbetrieb als Nernstzelle mit zwei unterschiedlich dichten Schutzschichten zu betreiben. Hierdurch stellt sich aufgrund der verschiedenen Diffusionskoeffizienten bei an der Elektrode abreagierenden Gasgemischen, die sich nicht im Gleichgewicht befinden, eine Nernstspannung zwischen den beiden Elektroden ein. Dabei entsteht z.B. der negative Pol der Nernstspannung an der Elektrode hinter der dichteren Schutzschicht, wenn das sauerstoffarme Gas schneller diffundiert. Für einen wenigstens zeitweisen Abgriff dieser Nernstspannung (Dispersions-Differenzspannung) sind auf besonders vorteilhafte Weise Änderungen am Sensorelement selbst nicht erforderlich. Es muß lediglich die Beschaltung des Sensorelementes geändert werden.

Durch die Beaufschlagung der Sonde mit einer Gesamtdruckerhöhung (Druckpulsation) bilden sich im zeitlichen Verlauf des Dispersionssignals die dynamischen Viskositäten der Gaskomponenten ab und können ausgewertet werden.

Bei einem Einsatz stromabwärts eines Katalysators ist damit eine Detektion möglich, ob die Reaktionen des Verbrennungsprozesses stattgefunden haben oder nicht, da sich für beispielsweise Sauerstoff dann, sobald alle Reaktionen stattgefunden haben, die gleichen Partialdrücke hinter den beiden Schutzschichten (also der Schutzschicht auf der Außenpumpelektrode und der Difrusionsbarriere) einstellen. Auf diese Weise kann auch die Alterung des Katalysators bestimmt werden. So muß eine Alterung angenommen werden, wenn sich nicht der gleiche Partialdruck einstellt.

Auf besonders vorteilhafte Weise können hierdurch auch beide Nemstspannungen gegenüber der Referenzelektrode gemessen werden und damit die absolute Nernstspannung wie bei einer konventionellen Lambda=1-Sprungsonde bestimmt werden. Dieses Signal läßt sich zur Regelung des Verbrennungsprozesses in der Nähe von Lambda=1 verwenden.

Die Nernstspannung wird hierzu bevorzugt zwischen der Referenzelektrode und der Außenpumpelektrode abgegriffen. Es wird damit die Spannung an der Außenpumpelektrode ohne Pumpstrom gemessen.

Eine besonders vorteilhafte Ausführungsform sieht ein Mittel zum Umschalten der Pumpspannung zwischen einer Schaltungseinheit, durch welche die Pumpspannung als Funktion der Abweichung der Ausgangsspannung der Nernstzelle zwischen dem Meßgasraum und einem Referenzgasvolumen von einem Sollwert gesteuert wird, was dem "Normalbetrieb" einer solchen Sonde entspricht, und einem Abgriff der Spannung zwischen der Außenpumpelektrode und einer Innenpumpelektrode vor, was dem "Dispersionsbetrieb" dieser Sonde entspricht. Durch dieses Umschaltmittel kann demnach auf einfache Weise zwischen einem Betrieb der Schaltungseinheit zur Erzeugung des Funktionspumpstroms und der Spannungsmessung umgeschaltet werden.

### Zeichnung

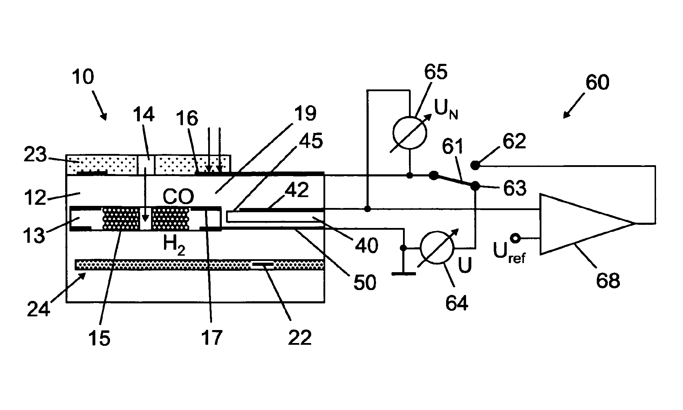

Weitere Vorteile und Merkmale der Erfindung werden nachfolgend anhand eines Ausführungsbeispiels der Erfindung erläutert. Die Figur zeigt ein erfindungsgemäßes Sensorelement zur Bestimmung der Konzentration einer Gaskomponente in einem Gasgemisch.

### Beschreibung eines Ausführungsbeispiels

Das in der Figur schematisch dargestellte Sensorelement zur Bestimmung der Konzentration von Gaskomponenten in einem Gasgemisch, insbesondere der Konzentration von Gaskomponenten im Abgas von Brennkraftmaschinen, weist einen dem Abgas der (nicht dargestellten) Brennkraftmaschine bzw. einem sonstigen Gasgemisch ausgesetzten, planaren Sensorkörper 10 auf. Der Sensorkörper 10 selbst umfaßt einen Festelektrolyten 12, z.B. eine mit Y₂O₃ stabilisierte ZrO₂-Keramik in dem ein beispielsweise ringförmiger Hohlraum 13 ausgebildet ist. Der Hohlraum 13 steht über eine zentrale Öffnung 14, die senkrecht in den Festelektrolyten 12 eingebracht ist, mit dem Abgas in Verbindung und ist gegenüber der Öffnung 14 durch eine poröse Diffusionsbarriere 15 abgedeckt.

Auf der Oberseite des Festelektrolyten 12 ist eine von einer porösen Schutzschicht 23 abgedeckte, großflächige Außenpumpelektrode 16 und innerhalb des Hohlraums 13 ist auf der der Außenelektrode 16 abgewandten Seite des Festelektrolyten 12 eine Innenpumpelektrode 17 angeordnet. Die Innenpumpelektrode 17 ist im Ausführungsbeispiel kreisringförmig ausgebildet und an ein Nullpotential gelegt.

An der ebenfalls ringförmigen, die zentrale Öffnung 14 umschließenden Außenpumpelektrode 16 liegt eine Spannung U an, auf die nachfolgend noch näher eingegangen wird.

Die Außenpumpelektrode 16 und die Innenpupmpelektrode 17 bilden zusammen mit dem Festelektrolyten 12 eine Pumpzelle 19.

Im wesentlichen in der gleichen Ebene wie der Hohlraum 13 ist ein Referenzgasvolumen 40 angeordnet. Eine Referenzelektrode 42 ist im Inneren des Referenzgasvolumens 40 auf den Festelekrolyten 12 aufgebracht. Eine Nernstelektrode 50 ist im Bereich des auch als Meßgasraum bezeichneten Hohlraums 13 der Innenpumpelektrode 17 gegenüberliegend und wie diese kreisringförmig ausgebildet. Die Nernstelektrode 50 liegt wie auch die Innenpumpelektrode 17 auf Nullpotential.

Die Innenpumpelektrode 17 und die im Referenzgasvolumen 40 angeordnete Referenzelektrode 42 bilden zusammen eine Nernst- bzw. Konzentrationszelle 45.

Unterhalb des Hohlraums 13 und des Referenzgasvolumens 40 ist ein Heizer 22 angeordnet, der beispielsweise mäanderförmig ausgebildet sein kann. Der Heizer 22 heizt den Festelektrolyten 12 auf eine vorgebbare, für die Messung erforderliche Temperatur auf. Hierzu ist eine in der Figur nicht dargestellte, an sich bekannte Steuerschaltung vorgesehen.

Das Sensorelement wird durch eine als Ganze mit Bezugszeichen 60 bezeichnete Ansteuerelektronik auf die nachfolgend beschriebene Weise angesteuert. Die Ansteuerelektronik 60 umfaßt ein Umschaltmittel 61, durch das zwischen einer Schaltstellung 62, in dem das Sensorelement auf an sich bekannte Weise betrieben wird, und einer weiteren Schaltstellung 63, auf die weiter unten näher eingegangen wird, umgeschaltet werden kann.

Es ist ein Operationsverstärker 68 vorgesehen, an dessen einem Eingang eine Referenzspannung U_{ref} anliegt, und an dessen anderem Eingang die an der Referenzelektrode 42 anliegende Spannung, die in der einen Schaltstellung 62 des Umschaltmittels 61 die Nernstspannung U_{N} ist, anliegt. Bei einer Nernstspannung U_{N} kleiner als beispielsweise 450 mV wird der Ausgang des Operationsverstärkers 68 positiv und treibt einen positiven Strom durch die Pumpzelle 19 - oder anders ausgedrückt: Eine vergleichsweise kleine Nernstspannung U_{N}, die einem Sauerstoffüberschuß im Meßgasraum 13 entspricht, führt zu einem Transport (negativer) Sauerstoffionen vom Meßgasraum 13 zum Abgas. Eine vergleichsweise hohe Nernstspannung U_{N} führt entsprechend zu einem sauerstoffreichen Strom vom Abgas zum Meßgasraum 13, so daß sich im eingeschwungenen Zustand eine vorgegebene Konzentration von Sauerstoff im Meßgasraum 13 einstellt. Der Ausgang des Operationsverstärkers 68 liegt so als Pumpspannung U auf an sich bekannte Weise an der Außenpumpelektrode 16 an.

In seiner zweiten Schaltstellung 63 verbindet das Umschaltmittel 61 einen Spannungsmesser (Voltmeter) 64 mit der Außenpumpelektrode 16. In dieser Schaltstellung wird demnach die Dispersions-Differenzspannung, die Spannung zwischen der Nernstelektrode 50 und der Außenpumpelektrode 16 abgegriffen. In dieser Schaltstellung des Umschaltmittels 61 kann gleichzeitig die Nernstspannung zwischen der Außenpumpelektrode 16 und der Referenzelektrode 42 mittels des Spannungsmessers 65 gemessen werden und so die absolute Nernstspanung U_{N} wie bei einer konventionellen Lambda = 1-Sprungsonde bestimmt werden.

Auf diese Weise ist bei einem Einsatz des Sensorelements stromabwärts eines Katalysators der Brennkraftmaschine eine Detektion möglich, ob das Abgas "fertig ausreagiert hat" oder nicht, d.h. ob das Abgas Gaskomponenten aufweist, welche beim Verbrennungsprozeß einer chemischen Reaktion unterlagen. Bei diesen werden sich ungleiche Partialdrücke hinter den beiden Schutzschichten einstellen, d.h. jeweils hinter der Schutzschicht 23 und der porösen Diffusionsbarriere 15. Hieraus kann auch auf die Alterung des Katalysators geschlossen werden.

Außerdem kann aufgrund des zeitlichen Verlaufs des Meßsignals bei Druckpulsationen kann auf die Viskosität der Gaskomponenten geschlossen werden.

Statt einer vorstehend beschriebenen Dispersionsspannungsmessung kann auch auf an sich bekannte Weise eine Messung des Kurzschlußstroms erfolgen.

## Patentansprüche

1. Sensorelement zur Bestimmung der Konzentration von Gaskomponenten in einem Gasgemisch, insbesondere der Konzentration von Gaskomponenten im Abgas von Brennkraftmaschinen, mit zwei zusammen mit einem Festelektrolyten (12) eine Pumpzelle (19) bildenden Elektroden, deren Außenpumpelektrode (16) über eine poröse Schutzschicht (23) dem Gasgemisch ausgesetzt ist, und mit einer am Festelektrolyten (12) angeordneten, einem Referenzgas ausgesetzten Referenzelektrode (42), die mit dem Festelektrolyten (12) und einer Nernstelektrode (50) eine Konzentrations-oder Nernstzelle (45) bildet, **dadurch gekennzeichnet, daß** wenigstens zeitweise die Nernstspannung zwischen der Außenpumpelektrode (16) und der Nernstelektrode (50) (Dispersions-Differenzspannung) abgegriffen und ausgewertet wird

2. Sensorelement nach Anspruch 1, **dadurch gekennzeichnet, daß** eine zweite Nernstspannung zwischen der Referenzelektrode (42) und der Außenpumpelektrode (16) abgreifbar ist.

3. Sensorelement nach Anspruch 1 oder 2, **gekennzeichnet durch** ein Mittel zum Umschalten zwischen einer Schaltungseinheit, **durch** welche die Pumpspannung (U) als Funktion der Abweichung der an der Referenzelektrode (42) anliegenden Spannung von einem Sollwert gesteuert wird, und einer Meßeinrichtung (64) zum Abgriff der Nernstspannung zwischen der Außenpumpelektrode (16) und der Nernstelektrode (50).

4. Verfahren zum Betreiben eines Sensorelements zur Bestimmung der Konzentration einer Gaskomponente in einem Gasgemisch, insbesondere der Konzentration von Gaskomponenten im Abgas von Brennkraftmaschinen, mit zwei zusammen mit einem Festelektrolyten (12) eine Pumpzelle (19) bildenden Elektroden, deren Außenpumpelektrode (16) über eine poröse Schutzschicht dem Gasgemisch ausgesetzt ist, und mit einer an dem Festelektrolyten (12) angeordneten, einem Referenzgas ausgesetzten Referenzelektrode (42), die mit einer Nernstelektrode (50) und dem Festelektrolyten (12) eine Konzentrations- oder Nernstzelle (45) bildet, **dadurch gekennzeichnet, daß** man eine Meßspannung zwischen der Nernstelektrode (50) und der Außenpumpelektrode (16) abgreift und auswertet.

5. Verfahren nach Anspruch 4, **dadurch gekennzeichnet, daß** man aus dem zeitlichen Verlauf der Meßspannung auf die Viskositäten der Gaskomponenten schließt.

6. Verfahren nach Anspruch 4, **dadurch gekennzeichnet, daß** man aus dem zeitlichen Verlauf der Meßspannung auf die Alterung eines Katalysators, stromabwärts dessen das Sensorelement angeordnet ist, schließt.

## Claims

1. Sensor element for determining the concentration of gas components in a gas mixture, in particular the concentration of gas components in the exhaust gas of internal combustion engines, having two electrodes which, together with a solid electrolyte (12), form a pump cell (19) and the outer pump electrode (16) of which is exposed to the gas mixture via a porous protective layer (23), and having a reference electrode (42) which is arranged on the solid electrolyte (12), is exposed to a reference gas and, with the solid electrolyte (12) and a Nernst electrode (50), forms a concentration or Nernst cell (45), **characterized in that** the Nernst voltage is at least occasionally tapped off between the outer pump electrode (16) and the Nernst electrode (50) (dispersion differential voltage) and is evaluated.

2. Sensor element according to Claim 1, **characterized in that** a second Nernst voltage can be tapped off between the reference electrode (42) and the outer pump electrode (16).

3. Sensor element according to Claim 1 or 2, **characterized by** a means for changing over between a circuit unit, which controls the pump voltage (U) as a function of the deviation of the voltage applied to the reference electrode (42) from a desired value, and a measuring device (64) for tapping off the Nernst voltage between the outer pump electrode (16) and the Nernst electrode (50).

4. Method for operating a sensor element for determining the concentration of a gas component in a gas mixture, in particular the concentration of gas components in the exhaust gas of internal combustion engines, having two electrodes which, together with a solid electrolyte (12), form a pump cell (19) and the outer pump electrode (16) of which is exposed to the gas mixture via a porous protective layer, and having a reference electrode (42) which is arranged on the solid electrolyte (12), is exposed to a reference gas and, with a Nernst electrode (50) and the solid electrolyte (12), forms a concentration or Nernst cell (45), **characterized in that** a measurement voltage is tapped off between the Nernst electrode (50) and the outer pump electrode (16) and is evaluated.

5. Method according to Claim 4, **characterized in that** the viscosities of the gas components are inferred from the temporal profile of the measurement voltage.

6. Method according to Claim 4, **characterized in that** the aging of a catalytic converter, downstream of which the sensor element is arranged, is inferred from the temporal profile of the measurement voltage.

## Revendications

1. Élément de détection pour déterminer la concentration de composantes gazeuses dans un mélange gazeux, notamment la concentration de composantes gazeuses dans les gaz d'échappement de moteurs à combustion interne, comprenant deux électrodes qui, combinées avec un électrolyte solide (12), forment une cellule de pompage (19) dont l'électrode de pompage extérieure (16) est exposée au mélange gazeux par le biais d'une couche de protection (23) poreuse, et comprenant une électrode de référence (42) disposée sur l'électrolyte solide (12) et exposée à un gaz de référence, laquelle forme avec l'électrolyte solide (12) et une électrode de Nernst (50) une cellule de concentration ou de Nernst (45), **caractérisé en ce que** la tension de Nernst entre l'électrode de pompage extérieure (16) et l'électrode de Nernst (50) (tension différentielle de dispersion) est relevée et interprétée au moins par intermittence.

2. Élément de détection selon la revendication 1, **caractérisé en ce qu'**une deuxième tension de Nernst peut être relevée entre l'électrode de référence (42) et l'électrode de pompage extérieure (16).

3. Élément de détection selon la revendication 1 ou 2, **caractérisé par** un moyen de permutation entre une unité de commutation, par le biais de laquelle la tension de pompage (U) est commandée en fonction de l'écart entre la tension présente sur l'électrode de référence (42) et une valeur de consigne, et un dispositif de mesure (64) pour relever la tension de Nernst entre l'électrode de pompage extérieure (16) et l'électrode de Nernst (50).

4. Procédé pour faire fonctionner un élément de détection destiné à déterminer la concentration d'une composante gazeuse dans un mélange gazeux, notamment la concentration de composantes gazeuses dans les gaz d'échappement de moteurs à combustion interne, comprenant deux électrodes qui, combinées avec un électrolyte solide (12), forment une cellule de pompage (19) dont l'électrode de pompage extérieure (16) est exposée au mélange gazeux par le biais d'une couche de protection poreuse, et comprenant une électrode de référence (42) disposée sur l'électrolyte solide (12) et exposée à un gaz de référence, laquelle forme avec une électrode de Nernst (50) et l'électrolyte solide (12) une cellule de concentration ou de Nernst (45), **caractérisé en ce qu'**une tension de mesure entre l'électrode de Nernst (50) et l'électrode de pompage extérieure (16) est relevée et interprétée.

5. Procédé selon la revendication 4, **caractérisé en ce que** les viscosités des composantes gazeuses sont déduites du tracé dans le temps de la tension de mesure.

6. Procédé selon la revendication 4, **caractérisé en ce que** le vieillissement d'un catalyseur en amont duquel est disposé l'élément de détection est déduit du tracé dans le temps de la tension de mesure.
